# EUROPÄISCHE PATENTSCHRIFT

(11) **EP 1 573 231 B1**
(45) Veröffentlichungstag und Bekanntmachung des Hinweises auf die Patenterteilung: **04.04.2007**
(21) Anmeldenummer: 03775373.8
(22) Anmeldetag: 20.11.2003
(51) Int. Cl.: F16H 25/22

(54) **KUGELGEWINDETRIEB**
BALL SCREW
VIS D'ENTRAINEMENT A BILLES

(30) Priorität: 18.12.2002 DE 10259690; 04.10.2003 DE 10346080
(43) Veröffentlichungstag der Anmeldung: 14.09.2005
(73) Patentinhaber: Schaeffler KG, 91074 Herzogenaurach (DE)
(72) Erfinder: OSTERLÄNGER, Jürgen, 91448 Emskirchen (DE); MAYER, Ralf, 91074 Herzogenaurach (DE); MÜNCK, Horst, 91074 Herzogenaurach (DE)
(86) Internationale Anmeldenummer: PCT/EP2003/012970
(87) Internationale Veröffentlichungsnummer: WO 2004/055415

(56) Entgegenhaltungen:
- EP-A- 0 893 612
- EP-A- 1 219 864
- US-A- 860 186
- US-A- 2 897 021
- US-A- 3 037 827
- US-A- 3 208 806

## Beschreibung

Die vorliegende Erfindung betrifft einen Kugelgewindetrieb nach dem Oberbegriff des Anspruchs 1, wie er aus EP 1 219 864 bekannt ist. Derartige Kugelgewindetriebe weisen eine Spindelmutter auf, die auf einer Gewindespindel unter Zwischenschaltung von Kugeln drehbar angeordnet ist.

Kugelgewindetriebe können unterteilt werden in solche mit Innenumlenkung und solche mit Außenumlenkung.

Im Fall der Innenumlenkung sind oftmals mehrere Kugelketten vorgesehen, die sich jeweils über etwa 360 Grad erstrecken. Die Kugelbahn erstreckt sich über etwa 360 Grad, windet sich also etwa einmal um die Rotationsachse. In der Spindelmutter sind Umlenkeinsätze angeordnet, die die Kugelkette vom Ende der Kugelbahn zu ihrem Anfang umlenken, und dabei die Kugeln über die Gewindeflanke der Gewindespindel heben.

Im Fall der Außenumlenkung erstreckt sich die Kugelkette, d.h. auch die Kugelbahn oftmals über mehrere Windungen; das Umlenkstück ist oftmals außerhalb der Spindelmutter angeordnet und übergreift entsprechend der Länge der Kugelkette eine Anzahl von Windungen, also Gewindeflanken.

Eine Kugelkette umfasst eine Vielzahl in Reihe angeordneter Kugeln. Zwischen einander benachbarten Kugeln können Zwischenstücke angeordnet sein. Zwischenstücke und Kugeln sind lose hintereinander angeordnet. Die Kugelkette ist in einem Kugelkanal angeordnet, der von an der Spindelmutter und an der Gewindespindel ausgebildeten Kugelrillen begrenzt ist. Durch die Anordnung der Kugelkette im Kugelkanal ist die Anordnung der Kugeln als Kugelkette gewährleistet. Derartige Zwischenstücke können auch als Abstandhalter oder Distanzstücke bezeichnet werden.

Aus DE 101 22 106 A1 beispielsweise ist ein Kugelgewindetrieb nach den Merkmalen des Oberbegriffs des Anspruchs 1 bekannt geworden. Zwischen einander benachbarten Kugeln sind Zwischenstücke angeordnet. Mit derartigen Zwischenstücken wird der Kontakt einander benachbarter Kugeln ausgeschlossen und somit Verschleiß in Folge von Reibung reduziert. Ferner können die Kugeln zur Aufrechterhaltung einer einwandfreien Kugelkette besser geführt werden.

Kugelgewindetriebe finden zunehmend Anwendung in Hilfskraftunterstützten Lenkgetrieben von Kraftfahrzeugen. Durch den Bewegungsablauf der Kugeln im Kugelkanal verursachte Geräusche können als störend empfunden werden. Ursache für derartige unerwünschte Geräusche kann ein zu großes Teilkreisendspiel der Kugelkette sein. Das bedeutet, dass einander benachbart angeordnete Kugeln in Erstreckungsrichtung der Kugeln Spiel zueinander aufweisen können und beispielsweise aneinander anschlagen können. Bei Kugelketten ohne Zwischenstücke kann diese Geräuschquelle besonders störend sein.

Aufgabe der vorliegenden Erfindung ist es, einen Kugelgewindetrieb nach den Merkmalen des Oberbegriffs des Anspruchs 1 anzugeben, bei dem eine unerwünschte Geräuschbildung reduziert ist.

Erfindungsgemäß wird diese Aufgabe gelöst mit den Merkmalen des Anspruchs 1. Dadurch ist gewährleistet, daß ein Spiel der Kugeln in der Achse der Kugelkette zumindets soweit reduziert ist, daß unerwünschte Klappergeräusche oder Hakeln der Kugelkette vermieden ist. Zusätzlich zu den Federelementen können Zwischenstücke zwischen aufeinander folgende Kugeln angeordnet sein, die die Kugeln lediglich auf Distanz zueinander halten. Die Zwischenstücke können untereinander durch Stege miteinander verbunden sein, so daß ein Band von Zwischenstücken gebildet ist. Die Zwischenstücke selbst können derart weitergebildet sein, daß sie selbst genügende federnde Eigenschaften haben, um die gewünschte Druckkraft in der Kugelkette auszuüben. In diesem Fall sind keine separaten Federelemente erforderlich.

In den Umlenkabschnitten des Kugelkanals sind die Kugeln im lastfreien Bereich. Auch in diesem lastfreien Bereich ist ein freies Spiel der Kugeln in der Achse der Kugelkette aufgrund der Anordnung der Federelemente ausgeschlossen.

Bei Kugelgewindetrieben mit Außenumlenkung erstreckt sich der lastfreie Bereich im Umlenkstück über einen weiten Bereich; es sind zu einem Zeitpunkt immer mehrere Kugeln in dem lastfreien Bereich; es kann genügen, wenn zwischen lediglich zwei dieser mehreren Kugeln eines der Federelemente angeordnet ist. Das Spiel der Kugelkette im Umlenkabschnitt kann durch dieses eine Federelement aufgefangen werden. Es ist auch denkbar, dass ein einziges Federelement in der Kugelkette ausreichend ist.

Bei Kugelgewindetrieben mit Innenumlenkung ist der Weg der lastfreien Zone im Umlenkbereich deutlich kürzer als bei Kugelgewindetrieben mit Außenumlenkung. Deshalb kann es zweckmäßig sein, das Verhältnis der Anzahl der Federelemente in Bezug auf die Anzahl der Kugeln der Kugelkette gegenüber den Kugelgewindetrieben mit Außenumlenkung zu erhöhen; und zwar beispielsweise soweit, dass ebenfalls zu einem Zeitpunkt immer ein Federelement im lastfreien Bereich ist.

Die Federelemente gleichen alle toleranz- , verschleiß- oder ausdehnungsbedingten Kettenlängenänderungen dauerelastisch aus und halten so das Teilkreisendspiel dauerhaft auf Null. Dadurch werden zum einen Störgeräusche durch Anschlagen der Kugel in Umfangsrichtung vermieden als auch mögliche Fehlstellungen der Zwischenstücke, die zu einem Blockieren der Kugelkette führen könnten. Grundsätzlich genügt ein Federelement pro Federkette. In jeden Fall ist mit dem erfindungsgemäßen Kugelgewindetrieb gewährleistet, dass das Teilkreisendspiel in der Kugelkette aufgehoben ist, also Null beträgt.

Eine erfindungsgemäße Weiterbildung sieht vor, dass das Federelement ein Zwischenstück umfasst, das aus zwei Zwischenstückhälften gebildet ist, wobei jede der Zwischenstückhälften mit einer Anlage für eine Kugel versehen ist und wobei eine zwischen beiden Zwischenstückhälften angeordnete Druckfeder die beiden Zwischenstückhälften in Richtung auf die benachbarten Kugeln anfedert. Die Vorteile können darin gesehen werden, dass zum einen die Zwischenstückhälften steif ausgeführt werden können, beispielsweise mit Kugelkalotten, in denen die Kugeln einwandfrei angeordnet sind. Gleichzeitig ist durch die Druckfeder sichergestellt, dass die Kugeln in der Kugelkette spielfrei angeordnet sind.

Das Zwischenstück kann aus Kunststoff oder aber auch als Blech gebildet sein. In beiden Fällen lassen sich auf preiswerte Weise Zwischenstücke fertigen.

Während bei dem zuvor beschriebenen erfindungsgemäßen Ausführungsbeispiel eine gängige Druckfeder, beispielsweise eine Schraubendruckfeder zum Einsatz kommen kann, ist bei einem anderen erfindungsgemäßen Kugelgewindetrieb vorgesehen, dass das Federelement durch ein zwischen zwei einander benachbarten Kugeln angeordnetes, die Kugeln auf Abstand haltendes Zwischenstück gebildet ist, dessen Arme die Kugel teilweise umgreifen, wobei die Arme federnd ausgebildet sind. Derartige Zwischenstücke können beispielsweise auf günstige Weise aus Kunststoff im Spritzverfahren gebildet werden. Die Arme liegen unter federnder Vorspannung an der Kugel an und biegen elastisch auf, wenn die Kugeln in Richtung auf die Arme angedrückt werden. Auch in diesem Fall ist ein freies Spiel der Kugeln entlang der Kugelkettenachse und somit Klappergeräusche ausgeschlossen, ein Teilkreisendspiel, das zu Klappergeräuschen führen könnte, ist vermieden.

Wenn das Federelement durch eine Schraubendruckfeder gebildet ist, kann diese in vorteilhafter Weise derart gestaltet sein, dass die an beiden Enden der Schraubendruckfeder angeordnete letzte Windung einen Durchmesser aufweist, der kleiner als der Kugeldurchmesser ist, wobei diese beiden letzten Windungen jeweils als Sitz für die Kugeln ausgebildet sind. Eine an sich bekannte Schraubendruckfeder kann demzufolge einer zweiten Verwendung zugeführt werden, nämlich als Sitz für die Kugel, um diese einwandfrei in der Kugelkette zu halten.

Wenn beispielsweise das Zwischenstück mit je drei über den Umfang verteilt angeordneten Armen für jede Kugel versehen ist, ist einerseits eine gute Selbstzentrierung gewährleistet, andererseits ist ein großer Raum zwischen diesen Armen als Schmiermittel Reservoir gebildet.

Wenn die Schraubendruckfeder im Längsschnitt gesehen ein konkaves Längsprofil aufweist, also die Kontur eines Rotationshyperboliden aufweist, ist eine gute Selbstzentrierung bei gleichzeitiger guter Anschmiegung dieser Schraubendruckfeder bei engen Umlenkradien gewährleistet.

Für erfindungsgemäße Kugelgewindetriebe, bei denen neben den Federelementen auch Zwischenstücke vorgesehen sind, kann bezüglich der Anzahl der Kugeln, der Federelemente und der Zwischenstücke folgende Regel aufgestellt werden:
Die Kugelkette umfasst Z Kugeln, sowie Y Federelemente, wobei Z minus Y Zwischenstücke vorgesehen sind. Die Größen Z und Y sind hierbei natürliche Zahlen.

Nachstehend wird die Erfindung anhand von 7 in insgesamt 10 Figuren dargestellten Ausführungsbeispielen näher erläutert. Es zeigen:
- Figur 1: eine Kugelkette eines erfindungsgemäßen Kugelgewindetriebes,
- Figur 2: einen Ausschnitt der Kugelkette gemäß Figur 1,
- Figur 3: einen Ausschnitt wie in Figur 2, jedoch mit modifiziertem Federelementen,
- Figur 4: einen Ausschnitt wie in Figur 3, jedoch mit modifiziertem Federelementen,
- Figur 5: einen Längsschnitt durch die Kugelkette aus Figur 4,
- Figur 6: ausschnittsweise eine Kugelkette eines weiteren erfindungsgemäßen Kugelgewindetriebes
- Figur 7: eine Darstellung wie in Figur 6, jedoch mit modifiziertem Federelement
- Figur 8: eine Darstellung wie in Figur 6, jedoch mit modifiziertem Federelement
- Figur 9: eine Darstellung wie in Figur 6, jedoch mit modifiziertem Federelement
- Figur 10: den grundsätzlichen Aufbau eines an sich bekannten Kugelgewindetriebes.

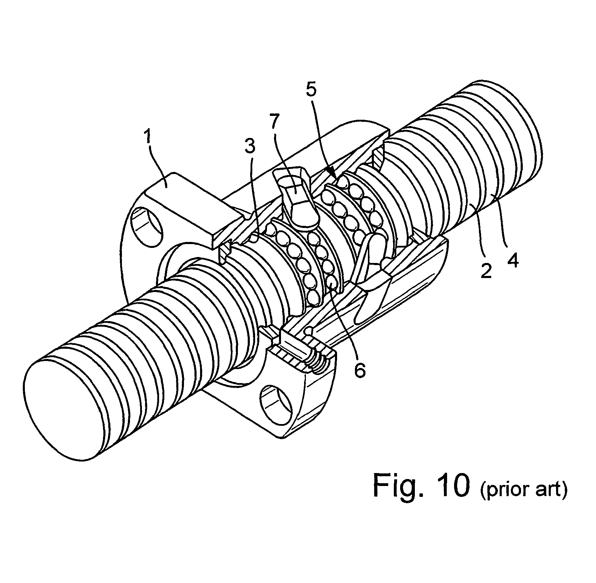

Zunächst soll kurz auf Figur 10 eingegangen werden, in der ein an sich bekannter Kugelgewindetrieb in perspektivischer Darstellung abgebildet ist. Eine Spindelmutter 1 ist auf einer Gewindespindel 2 drehbar angeordnet. Die Spindelmutter 1 ist mit einer schraubenförmig angeordneten Kugelrille 3 versehen. Die Gewindespindel 2 ist mit einer schraubenförmig angeordneten Kugelrille 4 versehen. Die Kugelrillen 3, 4 sind gewindeförmig ausgebildet und begrenzen Kugelkanäle 5, in denen Kugelketten 6 angeordnet sind. Jede Kugelkette 6 wird in einem von einem Umlenkstück 7 gebildeten Umlenkabschnitt des Kugelkanals 5 von einem Ende eines gemeinsamen Kugelkanals - also einer gemeinsamen Windung - zu einem Anfang dieses Kugelkanals 5 - oder der Windung - umgelenkt. Die Kugelkette 6 windet sich also endlos entlang des in Gestalt einer Schraubenwindung gebrachten Kugelkanals 5.

Nachstehend wird auf besondere Ausgestaltungen der Kugelkette eingegangen, die Gegenstand der vorliegenden Erfindung ist.

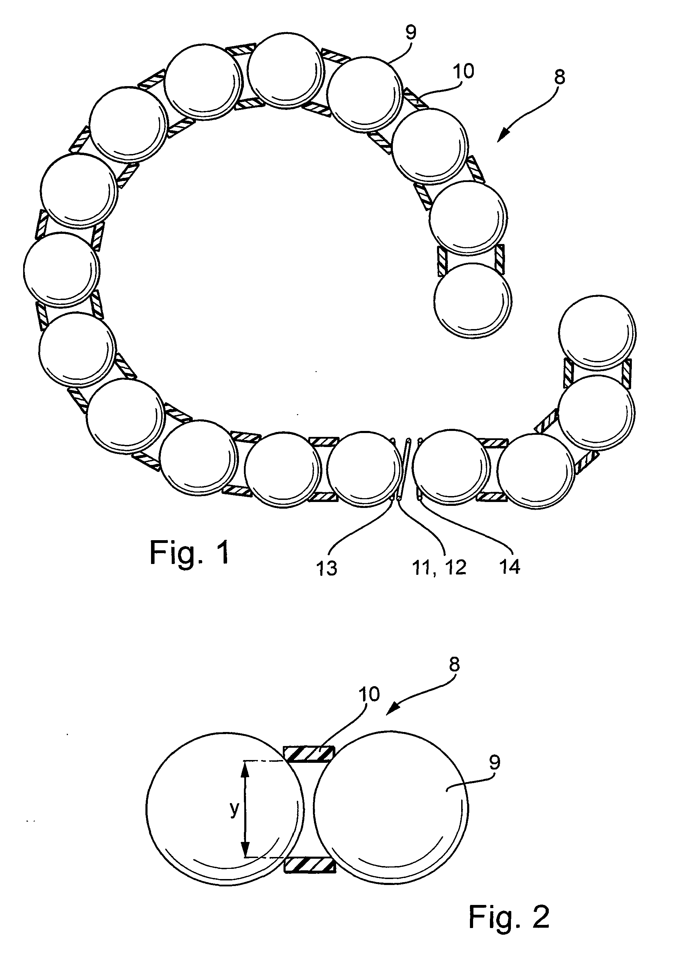

Figur 1 zeigt eine Kugelkette 8 eines erfindungsgemäßen Kugelgewindetriebes. Kugeln 9 sind in einer Reihe hintereinander angeordnet. Zwischen einander benachbart angeordneten Kugeln 9 ist jeweils ein Zwischenstück 10 angeordnet. Figur 2 zeigt deutlich in vergrößerter Darstellung das Zwischenstück 10, das als Ring ausgebildet ist. Der Innendurchmesser des Rings ist kleiner als der Kugeldurchmesser, sodass die Kugeln 9 etwas in die offenen Stirnseiten des Rings eintauchen und einwandfrei daran zentriert sind.

An einer Stelle der Kugelkette 8 ist zwischen zwei einander benachbart angeordneten Kugeln 9 ein Federelement 11 angeordnet. Dieses Federelement ist vorliegend als Schraubendruckfeder 12 ausgebildet. Das Federelement 11 übt auf die beiden benachbart angeordneten Kugeln eine Druckkraft aus, sodass alle Kugeln 9 der Kugelkette 8 spielfrei sind. Das Teilkreisendspiel, also ein freies Spiel zwischen der ersten und der letzten Kugel 9 der Kugelkette 8 ist ausgeschlossen. Klappergeräusche sind demzufolge ausgeschlossen.

Die erste und die letzte Windung 13, 14 der Schraubendruckfeder 12 weist einen Windungsdurchmesser auf, der kleiner als der Kugeldurchmesser ist. Die Kugeln 9 tauchen mit einem Teil ihres Umfangs in diese beiden Windungen 13, 14 ein. Diese Windungen 13, 14 bilden demzufolge einen Kugelsitz 15, 16.

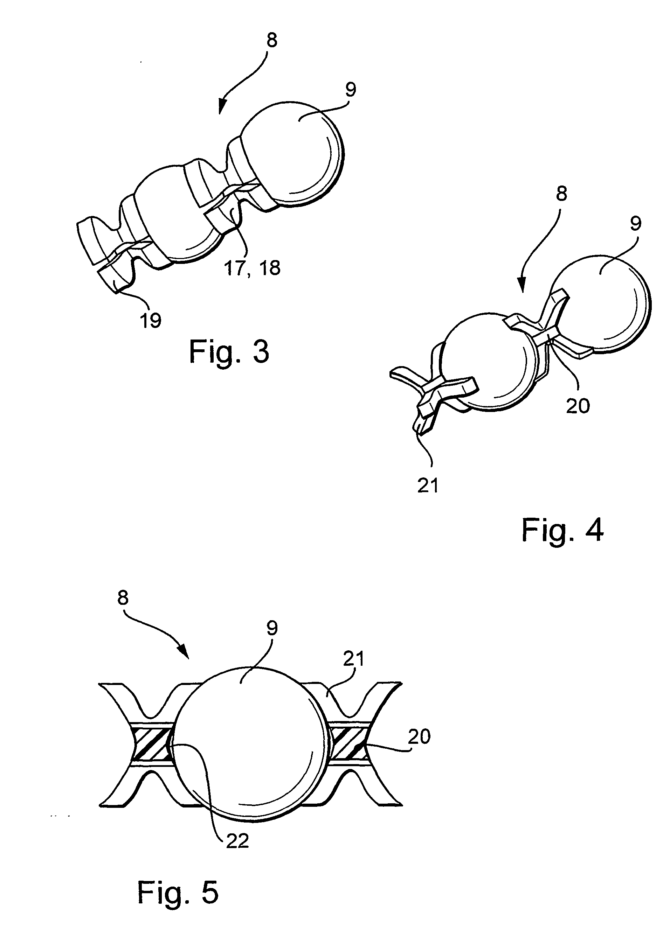

Figur 3 zeigt einen Ausschnitt der Kugelkette 8, jedoch mit modifizierten Federelementen 17. Dieses Federelement 17 ist als ein einander benachbarte Kugel 9 auf Abstand haltendes Zwischenstück 18 ausgebildet. Das besondere an diesen Zwischenstück 18 ist, dass mehrere über den Umfang verteilt angeordnete Segmente 19 vorgesehen sind, die die Kugeln 9 teilweise umfassen. Diese Segmente 19 sind federnd ausgebildet, und unter federnder Vorspannung gegen die Kugeln 9 angefedert. Auch hier ist sichergestellt, dass ein unerwünschtes freies Spiel der Kugel 9 in der Kugelkette 8 ausgeschlossen ist.

Figur 4 zeigt ein gegenüber Figur 3 modifiziertes Zwischenstück 20 bei dem anstelle von Segmenten federnde Arme 21 vorgesehen sind. Figur 5 zeigt deutlich, dass diese federnden Arme 21 mit ihren freien Enden gegen die Kugeln 9 angefedert sind. In Bereich der Wurzel der Arme 21 ist ein Freiraum 22 zwischen Kugel 9 und Zwischenstück 20 erkennbar. Wenn die in Figur 5 abgebildeten Zwischenstücke 20 aufeinander zugedrückt werden, weiten sich die Arme 21 federelastisch auf, wobei der Freiraum 22 kleiner wird. Auch hier ist sichergestellt, dass ein freies Spiel der Kugeln 9 in der Kugelkette 8 ausgeschlossen ist.

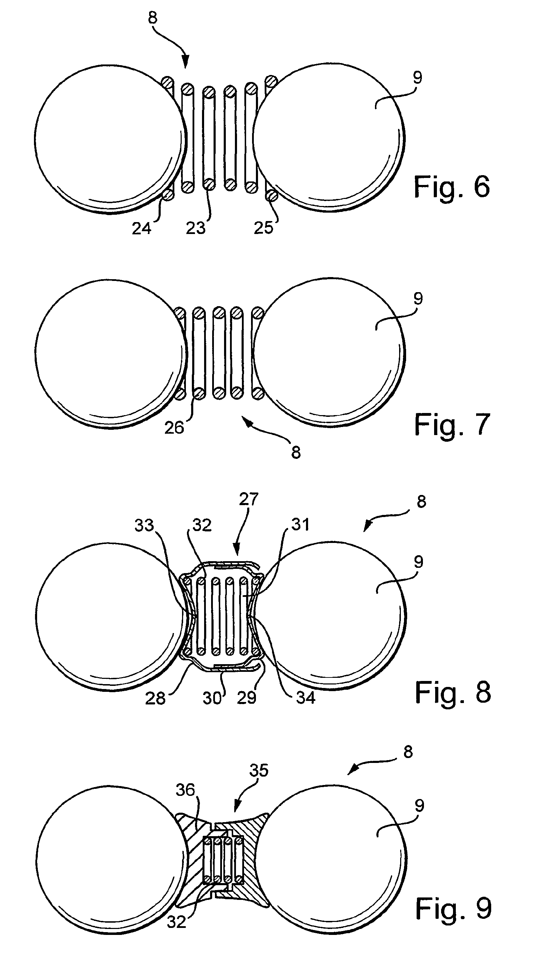

In den Figuren 6 und 7 ist wiederum ein Teil der Kugelkette 8 abgebildet, wobei eine Schraubendruckfeder 23 zwischen zwei einander benachbart angeordneten Kugeln 9 vorgesehen ist. Ebenso wie in den Ausführungsbeispiel in Figur 1 ist auch hier vorgesehen, dass die erste und die letzte Windung 24, 25 der Schraubendruckfeder 23 einen Windungsdurchmesser aufweist, der kleiner ist als der Kugeldurchmesser. Es ist deutlich erkennbar, dass die Kugel 9 mit einem kleinem Teil ihres Umfangs in diese Windungen 24, 25 eintaucht. Auf diese Weise ist sichergestellt, dass die Kugel 9 einwandfrei in der Kugelkette 8 zentriert sind. Ferner ist erkennbar, dass die Schraubendruckfeder 23 im Längsschnitt gesehen die Gestalt eines Rotationshyperboliden aufweist. Durch die im Mittelbereich verjüngte Gestalt der Schraubendruckfeder 23 ist sichergestellt, dass auch enge Umlenkradien im Kugelkanal 5 bewältigt werden.

Die in Figur 7 vorgeschlagene Schraubendruckfeder 26 ist im Längsschnitt gesehen zylindrisch ausgebildet.

In Figur 8 ist ein Federelement 27 vorgeschlagen, dass ein aus zwei Zwischenstückhälften 28, 29 gebildetes Zwischenstück 30 umfasst, wobei die Zwischenstückhälften 28, 29 entlang der Achse der Kugelkette 8 verschieblich zueinander angeordnet sind. Diese Zwischenstückhälften 28, 29 sind aus Blech gebogen und begrenzen gemeinsam einen Innenraum 31, in dem eine Schraubendruckfeder 32 angeordnet ist. Ebenso wie in den voran gegangenen Ausführungsbeispielen ist diese Schraubendruckfeder 32 federnd vorgespannt und federt die beiden Zwischenstückhälften 28, 29 gegen die beiden benachbart angeordneten Kugeln 9 an. Die beiden Zwischenstückhälften 28, 29 weisen an ihren den beiden Kugeln 9 zugewandten Seiten kalottenförmig ausgebildete Kugelsitze 33, 34 auf.

Figur 9 zeigt ein modifiziertes Federelement 35 das sich von dem aus der Figur 8 im wesentlichen dadurch unterscheidet, dass das Zwischenstück 36 aus Kunststoff gebildet ist.

### Bezugszahlenliste

- 1: Spindelmutter
- 2: Gewindespindel
- 3: Kugelrille
- 4: Kugelrille
- 5: Kugelkanal
- 6: Kugelkette
- 7: Umlenkstück
- 8: Kugelkette
- 9: Kugel
- 10: Zwischenstück
- 11: Federelement
- 12: Schraubendruckfeder
- 13: Windung
- 14: Windung
- 15: Kugelsitz
- 16: Kugelsitz
- 17: Federelement
- 18: Zwischenstück
- 19: Segment
- 20: Zwischenstück
- 21: Arm
- 22: Freiraum
- 23: Schraubendruckfeder
- 24: Windung
- 25: Windung
- 26: Schraubendruckfeder
- 27: Federelement
- 28: Zwischenstückhälfte
- 29: Zwischenstückhälfte
- 30: Zwischenstück
- 31: Innenraum
- 32: Schraubendruckfeder
- 33: Kugelsitz
- 34: Kugelsitz
- 35: Federelement

## Patentansprüche

1. Kugelgewindetrieb, zwischen dessen Spindelmutter (1) und Gewindespindel (2) mindestens eine aus Kugeln (9) gebildete Kugelkette (6, 8) jeweils entlang eines Kugelkanals (5) abwälzt, der von an der Spindelmutter (1) und an der Gewindespindel (2) ausgebildeten Kugelrillen (3, 4) begrenzt ist, wobei die Kugelkette (6, 8) in Umlenkabschnitten des Kugelkanals (5) von einem Ende des Kugelkanals (5) zu einem Anfang dieses Kugelkanals (5) umgelenkt wird, wobei ein oder mehrere in der Kugelkette (8) zwischen Kugeln (9) der Kugelkette (6, 8) angeordnete Federelemente (11, 17, 27, 35) in der Achse der Kugelkette (8) eine Druckkraft auf die Kugeln (9) ausüben, **dadurch gekennzeichnet, dass** die Anzahl der in der Kugelkette (6, 8) angeordneten Federelemente (11, 17, 27, 35) so bemessen ist, daß während eines Umlaufs der Kugelkette (6, 8) immer eines der Federelemente (11, 17, 27, 35) im Umlenkabschnitt des Kugelkanals (5) ist.

2. Kugelgewindetrieb nach Anspruch 1, bei dem das Federelement (27, 35) aufweist: ein Zwischenstück (30), gebildet aus zwei Zwischenstückhälften (28, 29), mit je einer Anlage für eine Kugel (9), und eine zwischen beiden Zwischenstückhälften (28, 29) angeordnete Schraubendruckfeder (32), die die beiden Zwischenstückhälften (28, 29) anfedert.

3. Kugelgewindetrieb nach Anspruch 2, bei dem die Zwischenstückhälften (28, 29) aus Kunststoff oder aus Blech gebildet sind.

4. Kugelgewindetrieb nach Anspruch 1, bei dem das Federelement ein zwischen zwei einander benachbarten Kugeln (9) angeordnetes, die Kugel (9) auf Abstand haltendes Zwischenstück (18, 20) aufweist, dessen Arme (21) oder Segmente (19) die Kugeln (9) teilweise umgreifen, wobei die Arme (21) oder die Segmente (19) federnd ausgebildet sind.

5. Kugelgewindetrieb nach Anspruch 1, bei dem das Federelement durch eine Druckfeder insbesondere Schraubendruckfeder (12, 23, 26, 32) gebildet ist.

6. Kugelgewindetrieb nach Anspruch 5, bei dem die an beiden Enden der Schraubendruckfeder (12, 23, 26) liegenden letzten Windungen (13, 14, 24, 25) einen Durchmesser aufweisen, der kleiner ist als der Kugeldurchmesser, wobei die letzten Windungen (13, 14, 24, 25) als Kugelsitz (15, 16, 33, 34) ausgebildet sind.

7. Kugelgewindetrieb nach Anspruch 6, bei dem die Schraubendruckfeder (23) im Längsschnitt gesehen ein konkaves Längsprofil aufweist.

8. Kugelgewindetrieb nach Anspruch 1, bei dem die Kugelkette (6, 8) Z Kugeln, sowie Y Federn (23, 26, 12) aufweist, wobei Z minus Y Zwischenstücke (10) vorgesehen sind.

## Claims

1. Ball screw, between the spindle nut (1) and threaded spindle (2) of which at least one ball chain (6, 8) formed from balls (9) rolls in each case along a ball channel (5) which is delimited by ball grooves (3, 4) formed on the spindle nut (1) and on the threaded spindle (2), the ball chain (6, 8) being deflected from one end of the ball channel (5) to a start of this ball channel (5) in deflection portions of the ball channel (5), one or more spring elements (11, 17, 27, 35) arranged in the ball chain (8) between balls (9) of the ball chain (6, 8) exerting a pressure force on the balls (9) in the axis of the ball chain (8), **characterized in that** the number of spring elements (11, 17, 27, 35) arranged in the ball chain (6, 8) is dimensioned such that, during an orbit of the ball chain (6, 8), there is always one of the spring elements (11, 17, 27, 35) in the deflection portion of the ball channel (5).

2. Ball screw according to Claim 1, in which the spring element (27, 35) has an intermediate piece (30), formed from two intermediate-piece halves (28, 29), each with a bearing surface for a ball (9), and a helical compression spring (32) which is arranged between the two intermediate-piece halves (28, 29) and springs on the two intermediate-piece halves (28, 29).

3. Ball screw according to Claim 2, in which the intermediate-piece halves (28, 29) are formed from plastic or from sheet metal.

4. Ball screw according to Claim 1, in which the spring element has an intermediate piece (18, 20) which is arranged between two balls (9) adjacent to one another and holds the balls (9) at a distance from one another and the arms (21) or segments (19) of which partially surround the balls (9), the arms (21) or the segments (19) being designed resiliently.

5. Ball screw according to Claim 1, in which the spring element is formed by a compression spring, in particular a helical compression spring (12, 23, 26, 32).

6. Ball screw according to Claim 5, in which the last turns (13, 14, 24, 25) lying at both ends of the helical compression spring (12, 23, 26) have a diameter which is smaller than the ball diameter, the last turns (13, 14, 24, 25) being designed as a ball seat (15, 16, 33, 34).

7. Ball screw according to Claim 6, in which the helical compression spring (23) has a concave longitudinal profile, as seen in longitudinal section.

8. Ball screw according to Claim 1, in which the ball chain (6, 8) has Z balls and Y springs (23, 26, 12), Z minus Y intermediate pieces (10) being provided.

## Revendications

1. Vis d'entraînement à billes, entre l'écrou d'arbre (1) et l'arbre fileté (2) de laquelle au moins une chaîne à billes (6, 8) formée de billes (9) roule chaque fois le long d'un canal à billes (5), lequel est délimité par des gorges à billes (3, 4) conformées sur l'écrou d'arbre (1) et sur l'arbre fileté (2), la chaîne à billes (6, 8) étant renvoyée dans des tronçons de renvoi du canal à billes (5) depuis une extrémité du canal à billes (5) vers un début dudit canal à billes (5), un ou plusieurs éléments ressort (11, 17, 27, 35) disposés dans la chaîne à billes (8) entre des billes (9) de la chaîne à billes (6, 8) exerçant une force de pression sur les billes (9) dans l'axe de la chaîne à billes (8), **caractérisée en ce que** le nombre d'éléments ressort (11, 17, 27, 35) disposés dans la chaîne à billes (6, 8) est calculé de telle sorte qu'un des éléments ressort (11, 17, 27, 35) se trouve toujours dans le tronçon de renvoi du canal à billes (5) pendant un tour complet de la chaîne à billes (6, 8).

2. Vis d'entraînement à billes selon la revendication 1, par laquelle l'élément ressort (27, 35) présente une pièce intermédiaire (30) formée de deux moitiés de pièce intermédiaire (28, 29) comportant chacune un appui pour une bille (9) et un ressort de pression à boudin (32) disposé entre les deux moitiés de pièce intermédiaire (28, 29), lequel fait ressort sur les deux moitiés de pièce intermédiaire (28, 29).

3. Vis d'entraînement à billes selon la revendication 2, par laquelle les moitiés de pièce intermédiaire (28, 29) sont en matière synthétique ou en tôle.

4. Vis d'entraînement à billes selon la revendication 1, par laquelle l'élément ressort présente une pièce intermédiaire (18, 20) disposée entre deux billes (9) voisines l'une de l'autre, maintenant les billes (9) distantes l'une de l'autre, dont les bras (21) ou les segments (19) entourent partiellement les billes (9), les bras (21) ou les segments (19) étant conformés de façon élastique.

5. Vis d'entraînement à billes selon la revendication 1, par laquelle l'élément ressort est formé par un ressort de pression, en particulier un ressort de pression à boudin (12, 23, 26, 32).

6. Vis d'entraînement à billes selon la revendication 5, par laquelle les dernières spires (13, 14, 24, 25) se trouvant aux deux extrémités du ressort de pression à boudin (12, 23, 26) présentent un diamètre inférieur au diamètre des billes, les dernières spires (13, 14, 24, 25) étant conformées en tant que siège de bille (15, 16, 33, 34).

7. Vis d'entraînement à billes selon la revendication 6, par laquelle le ressort de pression à boudin (23) présente, vu en coupe longitudinale, un profil longitudinal concave.

8. Vis d'entraînement à billes selon la revendication 1, par laquelle la chaîne à billes (6, 8) présente Z billes ainsi que Y ressorts (23, 26, 12), Z moins Y pièces intermédiaires (10) étant prévues.
